# EUROPÄISCHE PATENTSCHRIFT

(11) **EP 0 439 822 B1**
(45) Veröffentlichungstag und Bekanntmachung des Hinweises auf die Patenterteilung: **15.09.1993**
(21) Anmeldenummer: 90125352.6
(22) Anmeldetag: 22.12.1990
(51) Int. Cl.: B41F 9/00, B41F 13/18

(54) **Presseur einer Tiefdruckrotationsmaschine**
Impression cylinder for rotary intaglio printing machine
Cylindre d'impression pour rotative d'impression en creux

(30) Priorität: 01.02.1990 CH 319/90
(43) Veröffentlichungstag der Anmeldung: 07.08.1991
(73) Patentinhaber: Sulzer - Escher Wyss AG, CH-8023 Zürich (CH)
(72) Erfinder: Lehmann, Rolf, CH-8964 Rudolfstetten (CH); Schnyder, Eugen, CH-5622 Waltenschwil (CH)
(74) Vertreter: Paschedag, Hansjoachim

(56) Entgegenhaltungen:
- EP-A- 0 115 611
- DE-A- 2 058 315
- DE-A- 2 517 412
- DE-A- 3 710 724
- DEUTSCHER DRUCKER. vol. 24, no. 28, 15 September 1988, OSTFILDER DE Seiten 16-20; Obering K.-A. Springstein: "Die Spitzenqualität-im Tiefdruck hängt auch vom Presseursystem ab"

## Beschreibung

Die Erfindung betrifft einen Presseur einer Tiefdruckrotationsmaschine mit einem elastischen rohrförmigen Walzenmantel, der mittels Stützelementen auf einem zentralen Träger abgestützt ist und wobei über die Breite des Presseurs in Axialrichtung nebeneinander mehrere Stützelemente vorgesehen sind, welche zumindest zum Teil unabhängig voneinander zur Erzeugung einer in verschiedenen axialen Segmenten unterschiedlichen Presskraft in einer Pressebene ansteuerbar sind.

Ein solcher Presseur ist beispielsweise aus der CH-A-671 732, CH-A-590 732 oder DE-A-2 517 412 vorbekannt und dient beispielsweise zum Bedrucken von breiten Warenbahnen in einer Tiefdruckrotationsmaschine, wobei die zu bedruckende Warenbahn mittels des Presseurs gegen einen Formzylinder gepresst wird, um die in der Formzylinder-Gravur befindliche Farbe auf die Warenbahn, beispielsweise eine zu bedruckende Papierbahn, eine Kunststoffolie oder einen Bedruckstoff, zu übertragen. Solche Presseure haben den Vorteil, dass sie eine gleichmässige Druckbeaufschlagung über die Walzenbreite ermöglichen und ein einwandfreies Bedrucken breiter Warenbahnen bis in den Bereich von 10 Meter hinein gestatten. Durch Verwendung mehrerer Stützelemente mit separater Druckmittelzufuhr lassen sich solche Presseure auf verschiedene Bahnbreiten einstellen.

Bei Tiefdruckmaschinen ist es ein bekannter Effekt, dass infolge der Adhäsionskräfte und/oder der Kapillarkräfte die Farbe nicht immer vollständig die Farbnäpfchen der Gravur verlässt, was zu einem schlechten Ausdruck führt. Um diesen unerwünschten Effekt zu beseitigen, ist es z.B. aus DE-A-2 058 315 bekannt, die Oberfläche der Presseurwalze elektrostatisch aufzuladen, so dass mit Hilfe der elektrostatischen Ladung die Kapillarkräfte überwunden werden und die Farbe vollständig an den Bedruckstoff gelangt.

Bekannt ist ein Aufladeverfahren , bei dem die elektrostatische Aufladung der Presseurwalze über eine Coronaentladung zwischen einer an der Rückseite der Walze in kleinem Abstand angeordneten Elektrode und der Oberfläche der Presseurwalze erzeugt wird, welche auf der Walzenoberfläche eine elektrostatische Aufladung erzeugt, wobei sich die Ladung auf der Oberfläche verteilt und über den Bedruckstoff und den Formzylinder abfliesst. Da die Elektrode oberhalb der Presseurwalze angeordnet ist, spricht man zuweilen von "Top Loading".

Es sind auch Aufladesysteme bekannt, z.B. aus EP-A-115 611, die die Ladung von der Seite her durch den Presseurmantel auf die Oberfläche aufbringen. Dazu besteht der Mantel der Presseurwalze im Inneren zunächst aus einer hochisolierenden Schicht, auf die eine Schicht mit guter elektrischer Leitfähigkeit aufgebracht wird, die an wenigstens einem Walzenende über den darüber liegenden schlechter leitenden weichen Walzenmantelbezug hinausragt. Bei diesem als "Side Loading" bekannten System wird der herausragende Teil der hochleitenden Schicht von der Seite her über die gesamte Walzenbreite elektrisch aufgeladen, wobei sich die elektrische Ladung über den schlechter leitenden Walzenmantelbezug verteilt wird und dessen Oberfläche auflädt. Dieses System hat den Vorteil, dass keine äusseren Elektroden erforderlich sind und damit ein Bauteil, das wegen seiner Verschmutzung einen nennenswerten Wartungsaufwand erfordert, entfallen kann.

Bei diesen Verfahren stellt sich jedoch häufig die Aufgabe, mit der gleichen Maschine verschieden breite Materialbahnen mit der gleichen Presseurwalze bedrucken zu müssen. Bei schmaleren Warenbahnen führt das zu dem Problem, dass die Oberfläche des Presseurs an den Stellen, wo keine Materialbahn vorhanden ist, mit dem Formzylinder direkt in Kontakt kommt, da über die gesamte Breite die gleiche Presskraft wirkt. Da jedoch an diesen Stellen keine Warenbahn vorhanden ist, entfällt dort die isolierende Wirkung der Warenbahn und die elektrostatische Ladung fliesst bei Aufladung der Presseurwalze über die gesamte Breite auf dem Weg des geringsten Widerstandes, also vorzugsweise an diesen unbedeckten Stellen ab. Dort wo die Aufladung zur Farbübertragung auf die Warenbahn benötigt wird, wird also die Ladung reduziert und somit das Druckergebnis verschlechtert. Um diesen Nachteil zu vermeiden, besitzt der aus DE-A-2 058 315 bekannte Presseur abwechselnd über den Umfang verteilte verschieden lange leitfähige Schichten, die getrennt voneinander aufgeladen werden können. Somit können wahlweise nur breitere oder nur schmälere Leiterschichten angeschlossen und somit die elektrische Ladung auf die gewünschte Bahnbreite eingestellt werden. Nachteilig ist, dass infolge der Zwischenräume zwischen den Leiterschichten der Presseur-Umfang nicht gleichmässig sondern nur streifenweise aufgeladen werden kann, so dass keine optimale Druckqualität erreichbar ist. Ferner werden unter Druck verstärkt auf den unbedeckten Oberflächen des Presseurs Farbpartikel vom Formzylinder auf die Presseuroberfläche übertragen, so dass dieser dort schneller durch Abrasion und durch die in der Farbe enthaltenen Lösungsmittel zerstört wird.

Der Erfindung liegt die Aufgabe zugrunde, die vorstehend angeführten Nachteile des Standes der Technik zu beseitigen und einen Presseur zu schaffen, mit dem sich Warenbahnen verschiedener Breite mit in den Segmenten unterschiedlicher Presskraft in der gleichen Maschine unter Einsatz der elektrostatischen Druckhilfe mit verbesserter Druckqualität bedrucken lassen, ohne dass dabei die Presseurwalze an unbedeckten Flächen einem schnellen Verschleiss unterliegt.

Erfindungsgemäss wird diese Aufgabe dadurch gelöst, dass der Walzenmantel aus einem Walzenmantelbezug mit mässiger elektrischer Leitfähigkeit besteht, innerhalb dessen mindestens zwei Schichtpakete bestehend aus einer inneren, elektrisch isolierenden Schicht und einer Schicht mit guter elektrischer Leitfähigkeit vorgesehen sind, wobei sich wenigstens ein Schichtpaket in Axialrichtung nur über einen Teil der Breite des Presseurs erstreckt, wobei die einzelnen Schichtpakete getrennt voneinander mit elektrischer Ladung versorgbar sind, und wobei die Stützelemente derart angesteuert sind, dass nur die Stützelemente in denjenigen Segmenten eine Presskraft ausüben, in denen den Schichtpaketen elektrische Ladung zugeführt wird.

Unter guter elektrischer Leitfähigkeit ist hierbei die Grössenordnung der metallischen Leitung verstanden, und unter mässiger Leitfähigkeit der Bereich zwischen metallischer Leitung und elektrischen Isolatoren.

Die Schichtpakete erstrecken sich mit Vorteil über den gesamten Umfang des Presseurs.

Besonders vorteilhaft ist es, wenn wenigstens ein äusseres Schichtpaket auf einem inneren Schichtpaket angeordnet ist, und sich in Axialrichtung nur über einen Teil der Breite des innen anschliessenden Schichtpaketes erstreckt, so dass die Breiten der einzelnen Schichtpakete von innen nach aussen abnehmend jeweils einer sukzessiv abgestuften Warenbahnbehandlungsbreite entsprechen. Jedoch können auch mehrere Schichtpakete nebeneinander, jedoch isoliert voneinander vorgesehen sein.

Vorteilhaft ist es hierbei, die Ladungsversoigung der einzelnen Schichtpakete so auszubilden, dass bei der schmalsten Behandlungsbreite nur das entsprechende schmalste Schichtpaket mit elektrischer Ladung versorgt wird, bei der nächstfolgenden grösseren Behandlungsbreite, gleichzeitig das schmalste Schichtpaket und das unmittelbar anschliessende Schichtpaket etwas grösserer Breite, bei der drittschmalsten Behandlungsbreite, die drei obersten Schichtpakete usw. bis zur maximalen Behandlungsbreite, bei der sämtliche Schichtpakete gleichzeitig mit elektrischer Ladung versorgt sind.

Mit besonderem Vorteil ist die Druckmittelversorgung der Stützelemente so ausgebildet, dass jeweils nur diejenigen Stützelemente mit Druckmittel versorgt werden und somit eine Presskraft ausüben, welche jeweils unterhalb der mit elektrischer Ladung versorgten Schichtpakete angeordnet sind, während die aussen anschliessenden Stützelemente drucklos sind, so dass ausserhalb des wirklichen Druckbereiches auf die unbedeckten Oberflächen des Presseurs keine Presskraft einwirkt.

Von besonderem Vorteil ist es auch, um in den Bereichen ausserhalb der zu bedruckenden Warenbahn einen Kontakt des Presseurs mit dem Formzylinder zu verhindern, in den Aussenzonen des Presseurs entgegen der Pressrichtung wirkende Gegenstützelemente vorzusehen, welche bei Behandlung einer Warenbahn kleiner Breite eine Gegenkraft ausüben und den Presseurmantel vom Formzylinder wegziehen, während sie bei der vollen oder maximalen Warenbahnbreite unbeaufschlagt bleiben.

Die Erfindung wird anhand der in den beiliegenden Zeichnungen dargestellten Ausführungsbeispiele näher erläutert. Es zeigen:
- Fig. 1: eine Druckmaschine mit einem Presseur im Axialschnitt und mit einem Formzylinder,
- Fig. 2: einen Ausschnitt aus einem Walzenmantel, und
- Fig. 3: einen Ausschnitt aus einem anderen Walzenmantel.

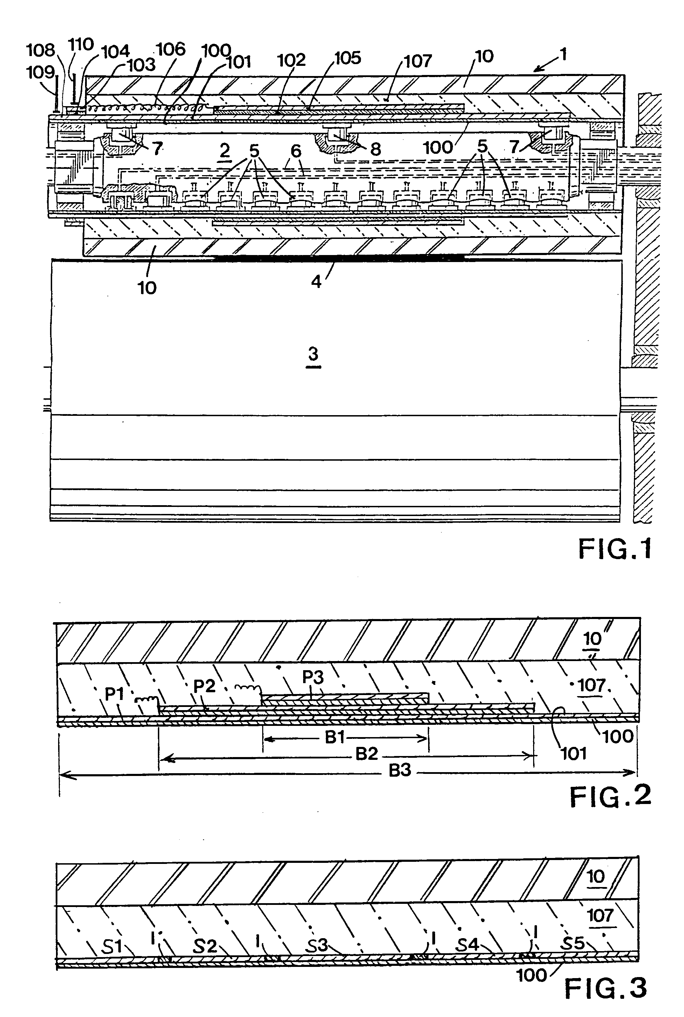

In Fig. 1 ist ein Presseur dargestellt, wie er beispielsweise in einer Tiefdruckmaschine eingesetzt wird. Er besteht aus einem Walzenmantel 1, der um einen feststehenden Träger 2 rotierbar ist und über einen Formzylinder 3 angetrieben wird. Zwischen dem Formzylinder 3 und dem Walzenmantel 1 läuft eine zu bedruckende Warenbahn 4 hindurch, deren Breite im dargestellten Ausführungsbeispiel nur etwa 55% der maximal möglichen Warenbahnbreite beträgt. Ueber die Breite des Presseurs sind in Axialrichtung nebeneinander mehrere Stützelemente 5 vorgesehen, die über eine jeweilige Steuerleitung 6 mit Druckmittel versorgt sind, und den Walzenmantel 1 gegen den Träger 2 abstützen.

Der Walzenmantel 1 ist im Durchmesser schichtweise und über die Breite segmentweise aufgebaut, wobei die einzelnen sich über den gesamten Presseur-Umfang erstreckenden Schichten aus Materialien verschiedener elektrischer Leitfähigkeit, z.B. unterschiedlichen Elastomeren, bestehen. Die äusserste Schicht 10 ist beispielsweise ein ca. 10 - 30 mm dicker Bezug aus Gummi, dem zur Erzielung einer mässigen elektrischen Leitfähigkeit in der Grössenordnung von ca. 10⁵ - 10⁷ Ohm.m eine genügende Menge Graphit oder andere leitfähige Stoffe beigemengt sind. Aehnliches gilt für die darunter liegende Schicht 107.

Die inneren Schichten des Walzenmantels 1 sind paketweise aufgebaut. Die innerste Schicht stellt den über die ganze Walzenbreite sich erstreckenden Grundkörper in der Form eines Rohres 100 mit ca. 1 - 3 mm Wandstärke dar, das als Ganzes oder zumindestens in seiner Oberflächenschicht als elektrischer Isolator mit sehr hohem spezifischem Widerstand über 10⁸ Ohm.m ausgebildet ist. Es kann beispielsweise aus einem glasfaserverstärkten Kunststoff bestehen oder einem ähnlichen Material. Dieses Rohr 100 ist mit den Stützelementen in direktem Kontakt oder kann auf einen nicht dargestellten Walzenmantel aufgezogen sein. Auf diesen Grundkörper 100 ist aussen eine ca. 0,1 - 0,3 mm dicke hochleitfähige Schicht 101 mit einem spezifischen Widerstand unter 10 Ohm.m, z.B. aus Kupfer, Silber oder Graphit in gewickelter Form, oder netz- oder flächenförmig aufgebracht. An einem Walzenende liegt diese Schicht 108 frei, um dort eine elektrische Ladung einführen zu können, die sich über die Schicht 101 über die gesamte Walzenbreite quasi gleichmässig verbreitet.

Ueber diesem innersten Schichtpaket 100, 101 ist in einem bestimmten mittleren Segment eine weitere Isolationsschicht 102 mit sehr hohem elektrischen Widerstand vorgesehen, wobei die Breite dieser Schicht etwa der Breite der zu bedruckenden, in diesem Beispiel relativ schmalen Warenbahn 4 entspricht. Eine analoge Isolationsschicht 103 ist ringförmig als Segment am Walzenende auf die leitende Schicht 108 aufgebracht. Auf die Isolationsschichten 102 und 103 sind wiederum hochleitende Schichten 105 bzw. 104 befestigt, wobei die Schichtsegmente 104 und 105 mit einem elektrischen Leiter, z.B. einem isolierten Draht 106, verbunden sind, so dass eine Ladungszufuhr am Walzenmantelende über die Schicht 104, den Zuführungsdraht 106 zur Schicht 105 erfolgen kann.

Die Anzahl von Schichtpaketen aus jeweils einem Isolator und einer hochleitenden Schicht wird so gewählt, dass möglichst alle zu erwartenden Warenbahnbreiten wenigstens angenähert der Breite eines Segmentes oder Schichtpaketes entsprechen. Fig. 2 zeigt ausschnittweise eine Anordnung mit drei Schichtpaketen P1, P2 und P3, wobei deren Segmentbreiten B1, B2 und B3 abgestuft nach aussen zunehmend schmaler werden, so dass eine stufenweise Anpassung an entsprechende Warenbahnbreiten möglich ist.

Stattdessen können, wie in Fig. 3 gezeigt, die Schichtpakete auch nebeneinander in Axialrichtung angeordnet sein , z.B. in der Form von mehreren, durch isolierende Zwischenräume 1 getrennten leitfähigen Schichten S1, S2...S5 auf einem gemeinsamen isolierenden Substrat 100.

Auf diese Schichtpakete, welche einzeln nur eine geringe Schichtdicke in der Grössenordnung von 1 - 2 mm aufweisen, sind eine oder mehrere mässig leitfähige Schichten 10, 107 vorgesehen, deren elektrische Leitfähigkeit markant unter der von Metallen liegt, und die in ihrer Leitfähigkeit so aufeinander abgestimmt sind, dass die Schicht 107 weniger leitfähig ist als die Schicht 10, wobei die gesamte Leitfähigkeit jedoch so gross ist, dass von den hochleitenden Schichten 101, 105 etc. abgegebene elektrische Ladungen sich im Walzenmantel nach aussen bis zur Oberfläche des Walzenmantelbezuges 10 ausdehnen und dort wirksam werden können. Schichtdicke und Material sind dabei so gewählt, dass die Ladung der hochleitenden Schichten sich über dem ganzen jeweiligen Segment gleichmässig verteilen muss, bevor sie über die äusseren Schichten und den Bezug in Richtung zur Warenbahn abfliessen kann.

Durch separate Einspeisungen 109 bzw. 110 für elektrische Ladungen am Walzenmantelende wird es möglich, wahlweise nur jeweils Teilsegmente aufzuladen. Wenn beispielsweise alle Einspeisungen gleichzeitig in Betrieb sind, wird die Presseurwalze auf der ganzen Breite mit elektrischer Ladung beaufschlagt. Wird dagegen nur Ladung über den Anschluss 110 zugefügt, so wird lediglich das äusserste Schichtpaket und deren hochleitende Schicht 105 aufgeladen und die elektrische Ladung fliesst vornehmlich nur über deren Breite in Richtung zur Warenbahn. Da in den seitlich anschliessenden Zonen die hochleitende Schicht 101 nicht aufgeladen ist, erfolgt dort ein deutlich geringerer Ladungsabfluss durch die mässig leitenden äusseren Schichten 107 und 10 hindurch zum unbedeckten Teil des Formzylinders, womit der erwünschte Effekt der Ladungskonzentration auf die Warenbahn 4 wenigstens teilweise erreicht wird. Die elektrische Leistung kann daher zufolge der Ladungskonzentration annähernd auf die Warenbahn reduziert werden. Ausserdem wird der Mantelbezug 10 bei dieser Betriebsart bezüglich Abrieb und Verschleiss geschont.

Besonders vorteilhaft ist es, zur Erzeugung einer Presskraft anstelle eines einzigen sich über die ganze Walzenbreite erstreckenden Stützelementes eine Anzahl von nebeneinander angeordneten Stützelementen vorzusehen, welche separat oder segmentweise mit Druckmittel beaufschlagbar sind, z.B. wie in CH-A-591 640 beschrieben, mit hydraulischem Druckmittel. Damit ist es möglich, den Kraftverlauf im Druckspalt über die Breite so zu variieren, dass die Druckkraft an den Stellen, die nicht von der Papierbahn überdeckt sind, wesentlich reduziert ist. Dies hat zur Folge, dass auch die elektrische Leitfähigkeit analog variiert und die elektrostatischen Ladungen vermehrt gezwungen sind, dort zum Formzylinder abzufliessen, wo ein erhöhter Kontaktdruck vorhanden ist.

Um bei Betrieb des Presseurs mit reduzierter Warenbahnbreite den Kontaktdruck ganz aufzuheben und einen Ladungsfluss zum Formzylinder völlig zu verhindern, ist es besonders vorteilhaft, in den Endbereichen des Walzenmantels 1 zusätzliche entgegengesetzt zur Pressrichtung wirkende Stützelemente 7 vorzusehen, welche nur bei Betrieb mit reduzierter Bahnbreite beaufschlagt sind und den Walzenmantel an den Enden dadurch vom Formzylinder wegziehen und somit den Ladungsfluss an den Enden weitgehend oder sogar völlig unterbinden.

Zusätzlich kann in der Mitte des Walzenmantels ein Abhebeelement 8 vorgesehen sein, welches mit Unterstützung der Gegenstützelemente 7 ein Abheben des Walzenmantels 1 des Presseurs vom Formzylinder 3 bei Stillstand zum Papiereinzug gestattet.

Die Steuerleitungen 6 der einzelnen Stützelemente 5 sind mittels einer Steuereinrichtung, an die auch die elektrischen Zuführungen 109 und 110 angeschlossen sind, derart mit Druckmittel versorgt, dass stets nur solche Stützelemente 5 Druckmittel zur Erzeugung einer Presskraft erhalten, die in den Zonen oder Segmenten der Walze liegen, die auch mit elektrischer Ladung versorgt sind.

Durch gleichzeitigen segmentweisen Betrieb sowohl der elektrostatischen Aufladung als auch der Stützelemente wird also die für eine gute Druckqualität erforderliche elektrische Ladung optimal reduziert und gleichzeitig der Verschleiss in den nicht benutzten Presseursegmenten verhindert.

## Patentansprüche

1. Presseur einer Tiefdruckrotationsmaschine mit einem rohrförmigen Walzenmantel (1), der mittels Stützelementen (5) auf einem zentralen Träger (2) abgestützt ist und wobei über die Breite des Presseurs in Axialrichtung nebeneinander mehrere Stützelemente (5) vorgesehen sind, welche zumindest zum Teil unabhängig voneinander zur Erzeugung einer in verschiedenen axialen Segmenten unterschiedlichen Presskraft in einer Pressebene ansteuerbar sind, dadurch gekennzeichnet, dass der Walzenmantel (1) aus einem Walzenmantelbezug (10, 107) mit einer elektrischen Leitfähigkeit besteht, die im Bereich zwischen metallischen Leitung und elektrischen Isolatoren liegt, innerhalb dessen mindestens zwei Schichtpakete (P1, P2, P3, S1...S5), bestehend aus einer inneren, elektrisch isolierenden Schicht (100, 102) und einer äusseren Schicht (101, 105) mit einer elektrischen Leitfähigkeit, die im Bereich der metallischen Leitung liegt, vorgesehen sind, wobei sich wenigstens ein Schichtpaket (P2, P3, S1...S5) nur über einen Teil der Breite des Presseurs erstreckt, wobei die einzelnen Schichtpakete (P1, P2, P3, S1...S5), getrennt voneinander mit elektrischer Ladung versorgbar sind, und wobei die Stützelemente (5) derart angesteuert sind, dass nur die Stützelemente (5) in denjenigen Segmenten eine Presskraft ausüben, in denen den Schichtpaketen (P1, P2, P3, S1...S5) elektrische Ladung zugeführt wird.

2. Presseur nach Anspruch 1, dadurch gekennzeichnet, dass jeweils ein äusseres Schichtpaket (P2, P3) auf einem inneren Schichtpaket (P1) vorgesehen ist und sich nur über einen Teil der Breite des innen anschliessenden Schichtpaketes erstreckt, so dass die Breiten (B1, B2, B3) der einzelnen Schichtpakete von innen nach aussen abnehmend jeweils einer sukzessiv abgestuften Warenbahnbehandlungsbreite entsprechen.

3. Presseur nach Anspruch 1, dadurch gekennzeichnet, dass über die Breite des Presseurs mehrere Segmente von Schichtpaketen (S1, S2...S5) vorgesehen sind, deren elektrisch leitfähige Schichten voneinander isoliert und getrennt voneinander mit elektrischer Ladung versorgbar sind.

4. Presseur nach Anspruch 3, dadurch gekennzeichnet, dass die elektrisch leitfähigen Schichten der Schichtpakete (S1, S2...S5) in Achsenrichtung des Presseurs nebeneinander auf demselben isolierenden Substrat (100) vorgesehen sind.

5. Presseur nach Anspruch 4, dadurch gekennzeichnet, dass die Schichtpakete (S1...S5) in Achsenrichtung durch elektrisch isolierende Zwischenstücke (I) voneinander getrennt sind.

6. Presseur nach einem der Ansprüche 1 - 5, dadurch gekennzeichnet, dass sich die Schichtpakete (P1...P3, S1....S5) über den gesamten Umfang des Presseurs erstrecken.

7. Presseur nach einem der Ansprüche 1 - 6, dadurch gekennzeichnet, dass in den Endbereichen des Presseurs zusätzliche, entgegengesetzt zur Pressrichtung wirkende Stützelemente (7) vorgesehen sind, welche derart angesteuert sind, dass sie eine Gegenkraft auf den Walzenmantel (I) auszuüben vermögen, wenn die Schichtpakete (P1, S1, S5) in den Endbereichen des Walzenmantels nicht mit elektrischer Ladung versorgt werden.

8. Presseur nach einem der Ansprüche 1 - 7, dadurch gekennzeichnet, dass die Stützelemente (5) von einer Steuereinrichtung über Steuerleitungen (6) im Träger (2) segmentweise synchron mit der Ladungsversorgung der zugeordneten Schichtpakete (P1, P2, P3) mit Druckmittel versorgt sind.

## Claims

1. An impression cylinder for a rotary intaglio printing machine having a tubular roller shell (1), which is supported by means of supporting components (5) on a central carrier (2) and in which respect over the width of the impression cylinder side-by-side in the axial direction several supporting components (5) are provided which are controllable at least partly independently of one another to generate a pressing force, different in various axial segments, in a pressing plane, characterised in that the roller shell (1) consists of a roller shell coating (10, 107) having an electrical conductivity which lies in the region between metallic conduction and electrical insulators, within which at least two layer sets (P1, P2, P3, S1...S5)), consisting of an inner electrically insulating layer (100, 102) and an outer layer (101, 105) having an electrical conductivity which lies in the region of metallic conduction, are provided, at least one layer set (P2, P3, S1...S5) extending only over part of the width of the impression cylinder, the individual layer sets (P1, P2, P3, S1...S5) being able to be supplied with electric charge separately from one another, and the supporting components (5) being controlled in such a way that only the supporting components (5) in those segments in which electric charge is fed to the layer sets (P1, P2, P3, S1..,S5) exert a pressing force.

2. An impression cylinder according to claim 1, characterised in that in each case an outer layer set (P2, P3) is provided on an inner layer set (P1) and extends only over part of the width of the inwardly adjoining layer set, so that the widths (B1, B2, B3) of the individual layer sets decreasing from the inside outwards in each case correspond to a successively graduated goods web treatment width.

3. An impression cylinder according to claim 1, characterised in that over the width of the impression cylinder several segments of layer sets (S1, S2...S5) are provided the electrically conductive layers of which are insulated from one another and can be supplied with electric charge separately from one another.

4. An impression cylinder according to claim 3, characterised in that the electrically conductive layers of the layer sets (S1, S2....S5) are provided in the axial direction of the impression cylinder side-by-side on the same insulating substrate (100).

5. An impression cylinder according to claim 4, characterised in that the layer sets (S1...S5) are separated from one another in the axial direction by electrically insulating intermediate pieces (I).

6. An impression cylinder according to any one of claims 1 to 5, characterised in that the layer sets (P1...P3, S1...S5) extend over the entire circumference of the impression cylinder.

7. An impression cylinder according to any one of claims 1 to 6, characterised in that provided in the end regions of the impression cylinder are additional supporting components (7) which act contrary to the pressing direction and which are controlled in such a way that they are able to exert a counter-force on the roller shell (1) when the layer sets (P1, S1, S5) in the end regions of the roller shell are not being supplied with electric charge.

8. An impression cylinder according to any one of claims 1 to 7, characterised in that the supporting components (5) are supplied with pressure medium by a control device by way of control conduits (6) in the carrier (2) by segments in synchronism with the charge supply of the associated layer sets (P1, P2, P3).

## Revendications

1. Cylindre presseur d'une machine rotative d'impression en creux avec un bandage de cylindre (1) tubulaire appuyé sur un support central (2) au moyen d'éléments d'appui (5), plusieurs éléments d'appui (5) étant prévus côte à côte dans le sens axial sur la largeur du cylindre presseur, en pouvant être commandés au moins en partie indépendamment les uns des autres pour produire dans un plan de pression une force de pression différente dans divers segments axiaux du cylindre presseur,
**caractérisé** en ce que le bandage du cylindre (1) est constitué d'une enveloppe (10, 107) du bandage de cylindre ayant une conductivité électrique située dans le domaine entre la conduction métallique et les isolants électriques, à l'intérieur de laquelle sont prévus au moins deux paquets de couches (P1, P2, P3, S1 ... S5) se composant d'une couche intérieure électriquement isolante (100, 102) et d'une couche extérieure (101, 105) ayant une conductivité électrique située dans le domaine de la conduction métallique, au moins un paquet de couches (P2, P3, S1 ... S5) s'étendant sur une partie seulement de la largeur du cylindre presseur, les divers paquets de couches (P1, P2, P3, S1...S5) pouvant être alimentés séparément les uns des autres avec des charges électriques, et les éléments d'appui (5) pouvant être commandés de telle manière que les éléments d'appui (5) exercent une force de pression seulement dans les segments dans lesquels les paquets de couches (P1, P2, P3, S1... S5) sont alimentés en charge électrique.

2. Cylindre presseur selon la revendication 1, caractérisé en ce que, chaque fois, un paquet de couches extérieur (P2, P3) est prévu sur un paquet de couches intérieur (P1) et s'étend sur seulement une partie de la largeur du paquet de couches intérieur sous-jacent, de telle sorte que les largeurs (B1, B2, B3) des divers paquets de couches correspondent chaque fois à une largeur d'impression d'une bande de matière échelonnée successivement, lesdites largeurs des paquets de couches étant décroissantes de l'intérieur vers l'extérieur.

3. Cylindre presseur selon la revendication 1 caractérisé en ce que plusieurs segments (S1, S2 ... S5) de paquets de couches sont prévus sur la largeur du cylindre presseur, les couches électriquement conductrices de ceux-ci étant isolées entre elles et pouvant être alimentées en charges électriques séparément l'une de l'autre.

4. Cylindre presseur selon la revendication 3, caractérisé en ce que les couches électriquement conductrices des paquets de couches (S1, S2 ... S5) sont prévues sur le même substrat isolant (100), côte à côte dans le sens axial du cylindre presseur.

5. Cylindre presseur selon la revendication 4, caractérisé en ce que les paquets de couches (S1 ... S5) sont séparés entre eux dans le sens axial par des éléments intermédiaires (I) électriquement isolants.

6. Cylindre presseur selon une des revendications 1 à 5, caractérisé en ce que les paquets de couches (P1 ... P3, S1 ... S5) s'étendent sur toute la périphérie du cylindre presseur.

7. Cylindre presseur selon une des revendications 1 à 6, caractérisé en ce que des éléments d'appui (7) agissant en sens opposé au sens de la pression d'impression sont prévus en supplément dans les régions des extrémités du cylindre presseur, en étant commandés de manière à pouvoir exercer une force opposée sur le bandage (1) du cylindre, quand les paquets de couches (P1, S1, S5) situés dans les régions des extrémités du bandage du cylindre ne sont pas alimentés en charges électriques.

8. Cylindre presseur selon une des revendications 1 à 7, caractérisé en ce que les éléments d'appui (5) sont alimentés par segments en fluide sous pression par un dispositif de commande par l'intermédiaire de conduites de commande (6) dans le support (2), en synchronisme avec l'alimentation en charges électriques des paquets de couches (P1, P2, P3) associés.
